# EUROPEAN PATENT APPLICATION

(11) **EP 2 295 317 A2**
(43) Date of publication of application: **16.03.2011**
(21) Application number: 09755064.4
(22) Date of filing: 05.06.2009
(51) Int. Cl.: B62K 15/00, B62K 21/16

(54) **PORTABLE BICYCLE**

(30) Priority: 26.05.2008 KR 20080048596
(71) Applicant: General Rotor Co., Ltd., Incheon 402-060 (KR)
(72) Inventor: HONG, Jae Ho, Bucheon-si Gyeonggi-do 422-705 (KR)
(74) Representative: Beetz & Partner
(86) International application number: PCT/KR2009/003014
(87) International publication number: WO 2009/145599

(57) **Abstract**

The portable bicycle is disclosed, which can make it possible to minimize the length of a bicycle by separating a guide sliding tube and a bicycle driving shaft and reconnecting the same for reducing the entire length of a bicycle in such a manner that a steering handle is folded in half by forming a small size gear train at an intermediate portion of a bicycle for thereby reducing the width of a bicycle, and the entire width of a bicycle can be further reduced by separating a pedal crank in such a manner that a pedal crank of a bicycle can be lifted or lowered with the aid of an elastic force of a plate spring or a coil spring about an engaging pin, so that a bicycle can be easily carried and stored.

## Description

### TECHNICAL FIELD

The present invention relates to a portable bicycle, and in particular to a portable bicycle which can make it possible to minimize the length of a bicycle by separating a guide sliding tube and a bicycle driving shaft and reconnecting the same for reducing the entire length of a bicycle in such a manner that a steering handle is folded in half by forming a small size gear train at an intermediate portion of a bicycle for thereby reducing the width of a bicycle, and the entire width of a bicycle can be further reduced by separating a pedal crank in such a manner that a pedal crank of a bicycle can be lifted or lowered with the aid of an elastic force of a plate spring or a coil spring about an engaging pin, so that a bicycle can be easily carried and stored.

### BACKGROUND ART

A bicycle is an important exercise means in modern life and can be conveniently used as local area transportation means. However it is needed for a user to move a bicycle to an exclusive road or a park where a user can safely ride a bicycle under the current road condition.

In this case, a user must move a bicycle to such a place by storing in a trunk of a vehicle or directly carrying on a public transportation means, both of which are actually very difficult for a user.

In order to overcome such problems, a new bicycle is disclosed, the volume of which can be reduced by folding to the extent that it could be stored in a trunk of a vehicle or can be reduced by making the wheels smaller.

When the wheels of a bicycle are made smaller or the size is simply reduced, a bicycle user might feel a large impact from a smaller protrusion on the road and might run slow, so it is very inconvenient for a bicycle user to use on the road with small sized protrusions or foreign substances.

A foldable type bicycle which is designed to fold the length by installing a hinge pin has a relatively larger volume even when it is folded in half. In this case, it is impossible to roll the wheels, so a user must move in a lifted state which causes a lot of inconveniences. Therefore, a conventional bicycle is not easy to move on a public transportation means.

### DISCLOSURE OF THE INVENTION

Accordingly, it is an object of the present invention to provide a portable bicycle in which a user can easily move a bicycle while using wheels by holding a handle of a bicycle after the length and width of a bicycle are significantly reduced.

It is another object of the present invention to provide a portable bicycle that a user can easily lift and move.

It is further another object of the present invention to provide a portable bicycle of which a handle can be folded in half not interfering with others when moving on a public transportation means.

It is still further another object of the present invention to provide a portable bicycle which is made in a certain size enough for an adult person to easily move by making a pedal crank detachable.

It is still further another object of the present invention to provide a portable bicycle that a user can easily use in the course of moving by significantly reducing the size of a bicycle.

The portable bicycle can be moved by rolling wheels in the course of moving by providing a horizontal frame and a body length adjusting apparatus so that the interval between a front wheel and a rear wheel can be reduced.

To achieve the above objects, there is provided a portable bicycle which can be carried and stored which comprises a handle bar folding apparatus 10 which is rotatably fixed by a one-side gear 10-3 and an other-side gear 10-4 which are engaged as the opposite ends of a one-side handle bar 10-1 and an other-side handle bar 10-2 are connected with each other, with the movements of the one-side gear 10-3 and the other-side gear 10-4 being limited by means of a handle 10-17; a pedal crank arm separating apparatus 20 in which a rectangular key groove is formed at both ends of the pedal crank arm 20-1 and is engaged with the rectangular keys of the pedal 20-6 and the driving shaft, for thereby detachably fixing the rectangular keys of the pedal 20-6 and the driving shaft while a stop pin 20-4 is elastically supported by means of a plate spring 20-2; a separated driving shaft apparatus 30 in which a one-side driving shaft 30-1 and an other-side driving shaft 30-2 connected with two pedal crank arms 20-1 are separated from each other, and the one-side driving shaft 30-1 and the other-side driving shaft 30-2 are drivingly connected with the driven driving shaft 30-7 fixed at the U-shaped bracket, and the front wheel of the bicycle is inserted into the interior of the U-shaped bracket 30-4 when it is needed to reduce the size of the bicycle; and a body length adjusting apparatus 40 which includes a sliding block 40-1 for allowing a square shaped horizontal frame 40-3 fixed at a fork of the front wheel to slide in the interior, with a saddle being fixed at the sliding block 40-1 with its height being adjustable, and the square shaped horizontal frame 40-3 can be fixed or move by means of the spiral cam roller 40-4 fixed at one side of the sliding block 40-1. The handle bar folding apparatus 10 is constituted in such a manner that the one-side gear 10-3 and the other-side gear 10-4 are fixed at the lower bracket 10-5 by using the one-side gear pin 10-6 and the other-side gear pin 10-7 at both ends of the one-side handle bar 10-1 and the other-side handle bar 10-2, and the one-side idle gear 10-8 and the other-side idle gear 10-9 are engaged with each other and fixed between the one-side gear 10-3 and the other-side gear 10-4 by using the one-side idle gear pin 10-10 and the other side idle gear pin 10-11, and a hole is formed at the center of the lower bracket 10-5, and the center pin 10-12 passes through hole, a spring 10-13 is inserted into an outer side of the passed-through center pin 10-12 and is fixed by a snap ring, and two holes are formed at the upper surfaces of the one-side gear 10-3 and the other side gear 10-4 at the same circumferential intervals at an angle of 90° with respect to the center line of each fixing pin, and the one-side gear fixing pin 10-14 and the other-side gear fixing pin 10-15 are fixedly inserted into the holes, and the upper ends of the center pin 10-12, the one-side gear fixing pin 10-14 and the other-side gear fixing pin 10-15 are inserted into three holes formed at the lower surface of the handle 10-17 via the holes formed at the upper cover 10-16. The pedal crank separating apparatus 20 is constituted in such a manner that a pin hole is formed at one side of the rectangular key groove formed at a circular inner diameter portion of the pedal crank arm 20-1, and a stop pin 20-4 is inserted into the pin hole, and a groove is formed at a circular end outer diameter portion, and one end of the plate spring 20-1 is fixed with a fixing screw 20-3, and the stop pin 20-4 is elastically supported by the other end of the plate spring 20-2, and part of the front end of the stop pin 20-4 is protruded from an outer side of the plate spring 20-2, and the pulling handle 20-5 is rotatably fixed, and the stop pin 20-4 can be fixed or detached as the stop pin is inserted into or escape from the hole formed at the rectangular groove of the pedal or the driving shaft. The separated driving shaft apparatus 30 is constituted in such a manner that the driving shaft apparatus is divided into a one-side driving shaft 30-1 and an other-side driving shaft 30-2, and the one-side chain sprocket 30-5 and the other-side chain sprocket 30-6 are axially fixed at the front ends of the one-side driving shaft 30-1 and the other-side driving shaft 30-2, and the support bearing 30-3 fixed at the one-side driving shaft 30-1 and the other-side driving shaft 30-2 is fixedly inserted into left and right sides of the U-shaped bracket 30-4, and the one-side driven sprocket 30-9 and the other-side driven sprocket 30-10 are axially fixed at the driven driving shaft 30-7 of which both ends are rotatably fixed at the inner side of the U-shaped bracket 30-4, and the one-side chain sprocket 30-5 and the one-side driven sprocket 30-9 are connected with a chain 30-11, and the other-side chain sprocket 30-6 and the other-side driven sprocket 30-10 are connected with each other. The body length adjusting apparatus 40 includes a sliding block fixed at a triangle frame of a bicycle, and a saddle support clamp 40-2 is fixed at left and right sides of the sliding block 40-1, respectively, and a square shaped horizontal frame 40-3 attached to the bearing housing member is slide-fixed into an inner rectangular cross section of the sliding block 40-1, and a groove is formed at one surface of the sliding block 40-1, and part of the spiral cam roller 40-4 is fixedly inserted into the cut-away groove, and the clamping or releasing operation is performed by pressing one side of the square shaped horizontal frame by rotating the handle 40-5 of the spiral cam roller 40-4. An elastic member 40-7 made of rubber, polyurethane, polymer compound or the like is coated on an outer surface of the spiral cam roller 40-4 for thereby preventing the slippery of the square shaped horizontal frame 40-3.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating the states that a portable bicycle is unfolded and the volume of the same is decreased according to the present invention;
Figure 2 is a view illustrating a handle bar folding apparatus of a portable bicycle according to the present invention;
Figure 3 is a view illustrating a handle bar folding apparatus of a portable bicycle according to the present invention;
Figure 4 is a view illustrating a pedal crank arm separating apparatus of a portable bicycle according to the present invention;
Figure 5 is a view illustrating a pedal crank arm separating apparatus of a portable bicycle according to the present invention;
Figure 6 is a view illustrating a separated driving shat apparatus of a portable bicycle according to the present invention; and
Figure 7 is a view illustrating a body length adjusting apparatus of a portable bicycle according to the present invention

### < Brief descriptions of major elements>

| | |
|---|---|
| 10: handle bar folding apparatus | 10-1: one-side handle bar |
| 10-2: other-side handle bar | 10-3: one-side gear |
| 10-4: other-side gear | 10-5: lower bracket |
| 10-6: one-side gear pin | 10-7: other-side gear pin |
| 10-8: one-side idle gear | 10-9: other-side idle gear |
| 10-10: one-side idle gear pin | 10-11: other-side idle gear pin |
| 10-12: center pin | 10-13: spring |
| 10-14: one-side gear fixing pin | 10-15: other-side gear fixing pin |
| 10-16: upper cover | 10-17: handle |
| 20: pedal crank arm separating apparatus | |
| 20-1: pedal crank arm | |
| 20-2: plate spring | 20-3: fixing screw |
| 20-4: stop pin | 20-5: pulling handle |
| 20-6: pedal | 30: separated driving shaft apparatus |
| 30-1: one-side driving shaft | 30-2: other-side driving shaft |
| 30-3: support bearing | 30-4: U-shaped bracket |
| 30-5: one-side chain sprocket | 30-6: other-side chain sprocket |
| 30-7: driven driving shaft | 30-8: rotation bearing |
| 30-9: one-side driven sprocket | 30-10: other-side driven sprocket |
| 30-11: chain | 30-12: protection cover |
| 30-13: gear | 30-14: idle gear |
| 40: body length adjusting apparatus | |
| 40-1: sliding block | |
| 40-2: saddle support clamp | 40-3: square-shaped horizontal frame |
| 40-4: spiral cam roller | 40-5: handle |
| 40-6: support bracket | 40-7: elastic member |

### MODES FOR CARRYING OUT THE INVENTION

The construction of the present invention will be described with reference to the accompanying drawings.

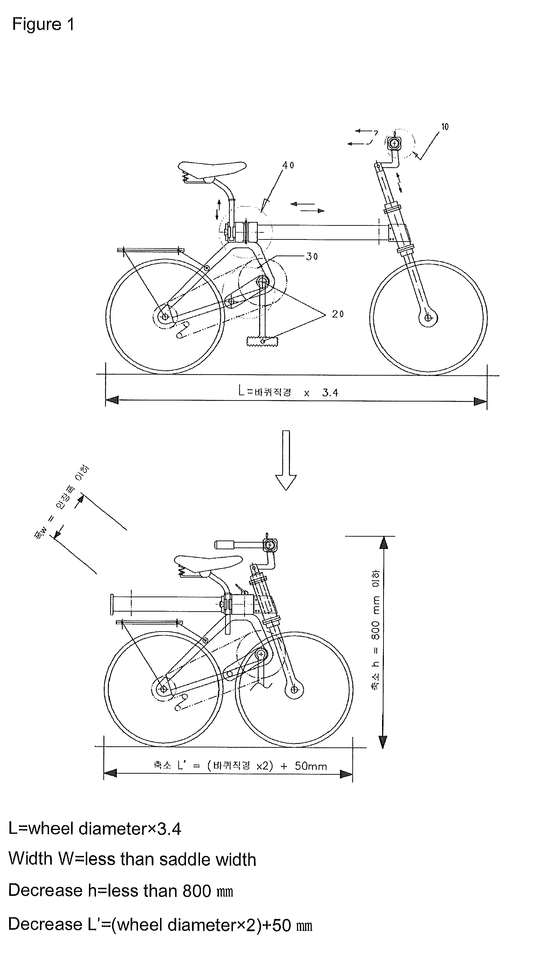

Figure 1 shows a folded bicycle and an unfolded bicycle, the bicycle comprising a handle bar folding apparatus 10 for an easier carry and movement, a pedal crank arm separating apparatus 20, a separated driving shaft apparatus 30, and a body length adjusting apparatus 40.

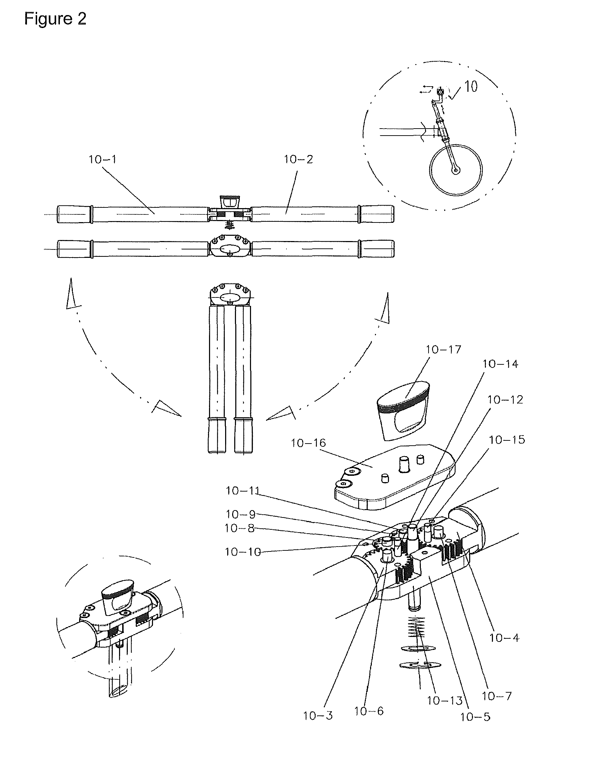

Figure 2 shows a detailed construction of the handle bar folding apparatus 10.

A steering handle bar of a bicycle is made in such a maker that an intermediate portion of a handle bar made of one tube is fixed by a clamp attached at a front end of a stem connecting a fork and a handle bar, and a handle part (grip) is formed at left and right sides.

In the present invention, the steering handle bar is divided into a one-side handle bar 10-1 and an other-side handle bar 10-2 by using a circular tube, and a one-side gear 10-3 and an other-side gear 10-4 are fixedly inserted into the front sides of the tubes of the one-side handle bar 10-1 and the other-side handle bar 10-2.

A plurality of holes are formed at the upper surface of a lower bracket 10-5 which supports the steering handle bar, and the one-side gear 10-3 and the other-side gear 10-4 are fixed in the holes with the aid of a one-side gear pin 10-6 and an other-side gear pin 10-7.

A one-side idle gear 10-8 and an other-side idle gear 10-9 are rotatably fixed in the holes of the surface of the lower bracket 10-5 with the aid of a one-side idle gear pin 10-10 and an other-side idle gear pin 10-11.

Here the one-side gear 10-3 and the one-side idle gear 10-8 are engaged with each other, and the one-side gear 10-3 is engaged with the other-side idle gear 10-9 via a certain operation, and the other-side idle gear 10-9 is engaged with the other-side gear 10-4 which forms a gear train structure.

With the above construction, it is possible to make the entire construction more compact-sized and the rotation direction of the one-side and other-side gears reverse.

In addition, a hole (not shown) is formed at the center of the lower bracket 10-5, and a center pin 10-12 passes through the hole, and a spring 10-13 is inserted into an outer surface of the passed-through center pin 10-12. The spring 10-13 is fixed by using a washer and a snap ring, and the lower side of the lower bracket 10-5 is fixedly attached to a stem tube, and in the finished product, the passed-through portion of the center pin 10-12 and the spring, washer and snap ring cannot be seen from the outside.

Two holes are formed at the upper sides of the one-side gear 10-3 and the other-side gear 10-4 at an angle of 90° at the same circumferential intervals about the center line of each fixing pin.

When the one-side handle bar 10-1 and the other-side handle bar 10-2 are on a straight line, the one-side fixing pin 10-4 and the other-side gear fixing pin 10-15 are inserted into the holes formed in parallel with the center pin 10-12 in left and right sides.

So, the center pin 10-12, the one-side gear fixing pin 10-14 and the other-side gear fixing pin 10-15 are arranged on a straight line. The upper cover 10-16 having the holes through which the one-side gear fixing pin 10-14, the other-side gear fixing pin 10-15 and the center pin 10-12 pass through is assembled by an engaging bolt.

The front ends of the center pin 10-12, the none-side gear fixing pin 10-14 and the other-side gear fixing pin 10-15 are protruded from three holes passing through the upper cover 10-16, and the front ends of the center pin 10-12, the one-side gear fixing pin 10-14 and the other-side fixing pin 10-15 are fixedly inserted into the three holes (not shown) formed in the lower surface of the handle 10-17.

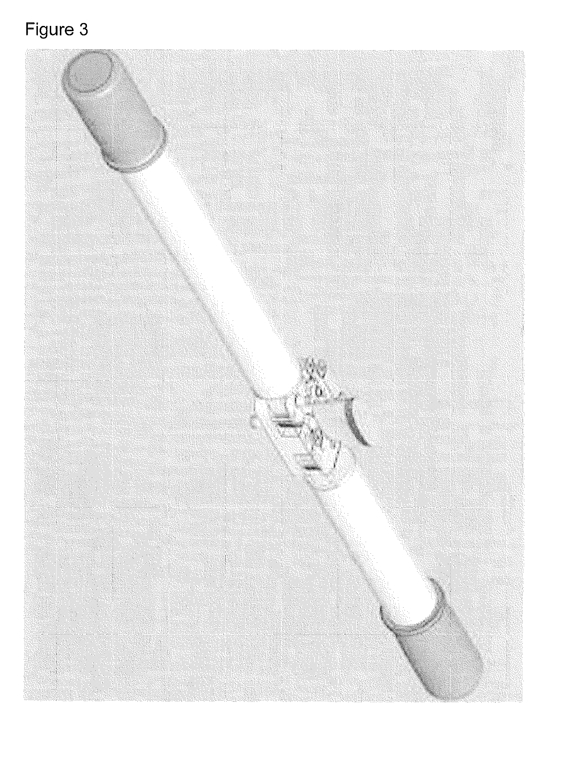

Figure 3 is a view illustrating the steering handle bar folding apparatus 10.

The operation of the steering handle bar folding apparatus will be described. When the handle 10-17 is held and lifted up in a vertical direction, the spring 10-13 is compressed, and the center pin 10-12, the one-side gear fixing pin 10-14 and the other-side gear fixing pin 10-15 are lifted up in a vertical direction along with the handle 10-17. At this time,

When one of the one-side handle bar 10-1 and the other-side handle bar 10-2 is held and rotated in the direction of a bicycle user body, the handle bar of the opposite side is rotated in the direction of the user body, and when the held handle 10-17 is released, the handle 10-17, and the center pin 10-12, the one-side gear fixing pin 10-14 and the other-side gear fixing pin 10-15 fixed to the handle 10-17 move down with the aid of a repulsive force of the spring 10-13.

At this time, the one-side gear fixing pin 10-14 and the other-side gear fixing pin 10-15 are inserted into the holes formed perpendicular to the center line of the handle bar at the same circumferential interval at an angle of 90° with respect to the center line of each fixing pin on the upper surface of the one-side gear 10-3 and the other-side gear 10-4 for thereby fixing the one-side gear fixing pin 10-4 and the other-side gear fixing pin 10-15.

In addition, when the one side and other side handle bars are supposed to be on the same line for steering in the course of bicycle use, the same operation as the above is performed.

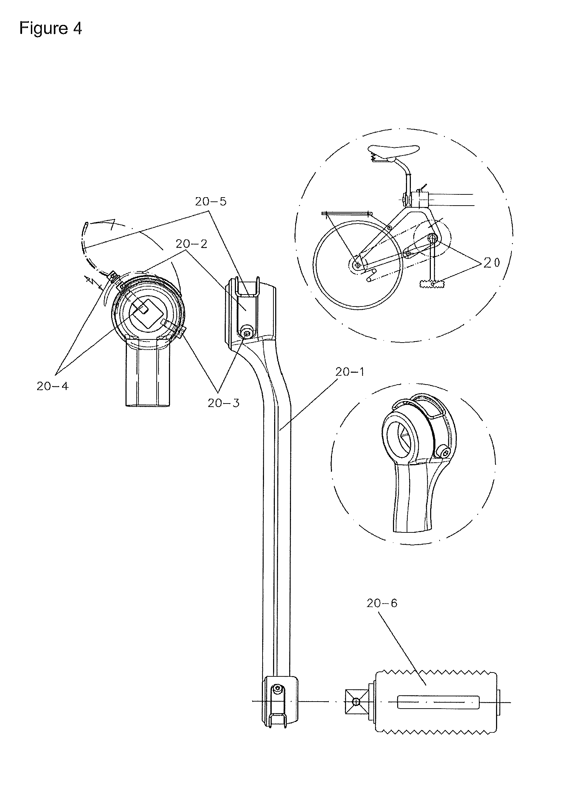

Figure 4 is a view of a pedal crank arm separating apparatus 20.

A groove is formed at a circular front end of the pedal crank arm 20-1 for rotating the driving shaft with a proper torque by rotating the pedals of a bicycle, and a plate spring 20-1 having holes at its both ends is inserted into the groove.

The hole of one end of the plate spring 20-1 is fixed in a groove of the pedal crank arm 20-1 with a fixing screw 20-3, and the upper end of a stop pin 20-4 is fixedly inserted into the hole of the other side. One end of the stop pin 20-4 is inserted into the hole formed at a circular front end of the pedal crank arm 20-1, and part of the front end of the stop pin 20-4 is protruded from the plate spring 20-2, and a bent pulling handle 20-5 is rotatably fixed at the protrusion for safety.

The operation of the above construction will be described. The front end of the driving shaft of the bicycle and the interior of the circular front end of the pedal crank arm 20-1 are equipped with a rectangular key and a rectangular groove for being assembled with each other for a reliable driving force transfer and are fixed with a screw.

When the rectangular key of the front end of the driving shaft is engaged to the inner rectangular groove of the pedal crank arm 20-1, the bent pulling handle 20-5 is lifted up, and the pulling handle 20-5 is pulled. The force applied to the pulling handle 20-5 overcomes the elastic force of the plate spring 20-2, so the stop pin 20-4 is lifted up.

The pedal crank arm 20-1 is inserted into the rectangular key of the front end of the driving shaft, and the pulling handle 20-5 is released, so part of the stop pin 20-4 is inserted into the hole formed at the rectangular key of the front end of the driving shaft of the bicycle with the aid of a recovery force of the plate spring 20-2.

So, the pedal crank arm 20-1 does not escape from the driving shaft of the bicycle in the course of riding with the aid of the stop pin 20-4.

The pedal crank arm 20-1 can be easily attached or detached from the driving shaft by pulling or releasing the pulling handle 20-5, and the detached pedal crank arm can be stored under the saddle of the bicycle.

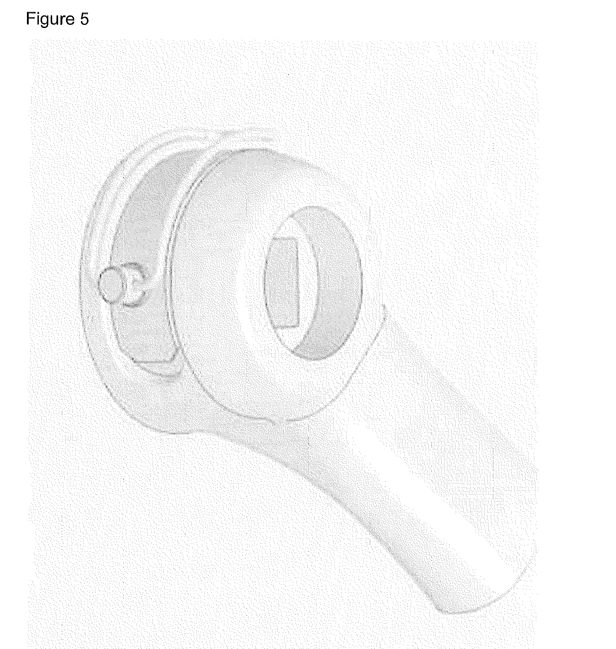

Figure 5 is a view of the pedal crank arm separating apparatus 20.

In the bicycle pedals, the front end of the rotary shaft of the pedal 20-6 is made in a shape of rectangular key, and a hole is formed for receiving the stop pin, and a groove is formed at a circular outer side of the lower end of the pedal crank arm. So, only the pedals can be attached or detached with the aid of the plate spring, the fixing screw and the stop pin.

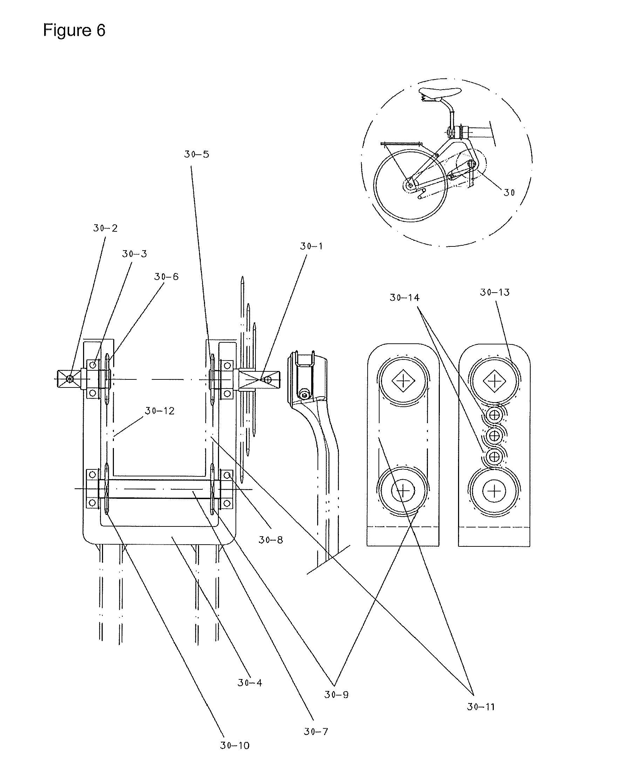

Figure 6 is a view of the separated driving shaft apparatus 30.

In the conventional art, a bicycle is generally designed to move by pedaling after the chain sprocket is axially fixed at the driving shaft, and the pedal crank arm is connected. In the conventional art, when it is needed to pull the front wheel of the bicycle in order to reduce the volume of the bicycle, it is impossible to reduce the length by a desired length due to the interference of the driving shaft member fixed at the center of the bicycle. However, in the present invention, the driving shaft is divided into two parts, and the front wheel of the bicycle is inserted into between the divided driving shafts, so it is possible to reduce the length of the bicycle by a desired length for thereby significantly reducing the entire volume.

The driving shaft is divided into the one-side driving shaft 30-1 and the other-side driving shaft 30-2, and the one-side chain sprocket 30-5 is fixed at the front end of the one-side driving shaft 30-1, and the pedal crank arm 20-1 is engaged, and the pedal 20-6 is fixed.

The pedal crank arm 20-1 is engaged to the front end of the other-side driving shaft 30-2, and the pedals 20-6 are fixed.

A support bearing 30-3 is fixed at the one-side driving shaft 30-1 and the other-side driving shaft 30-2, respectively, for a smooth rotation, and the support bearing 30-3 is fixedly inserted into the left and right sides of the U-shaped bracket 30-4.

The one-side chain sprocket 30-5 and the other-side chain sprocket 30-6 are fixed at the ends of the one-side driving shaft 30-1 and the other-side driving shaft 30-2. The both ends of the driven driving shaft 30-7 are rotatably supported inside the U-shaped bracket 30-4, and the one-side driven sprocket 30-9 and the other-side driven sprocket 30-10 are axially fixed at the driven driving shaft 30-7.

The one-side driven sprocket 30-9 and the other-side driven sprocket 30-1 are connected with the one-side chain sprocket 30-5 and the one-side driven sprocket 30-9 are connected by the chain 30-11, and the other chain sprocket 30-6 and the other-side driven sprocket 30-10 are connected.

The protection cover 30-12 is attached inside the U-shaped bracket 30-4 for covering the sprockets.

The gear 30-12 can be used instead of the chain sprocket and the idle gear 30-14 can be used instead of the chain for the same purpose. With the above construction, the bicycle can move as the one-side and other-side driving shafts rotate in the same direction while reducing the length of the bicycle which is the main purpose of the present invention.

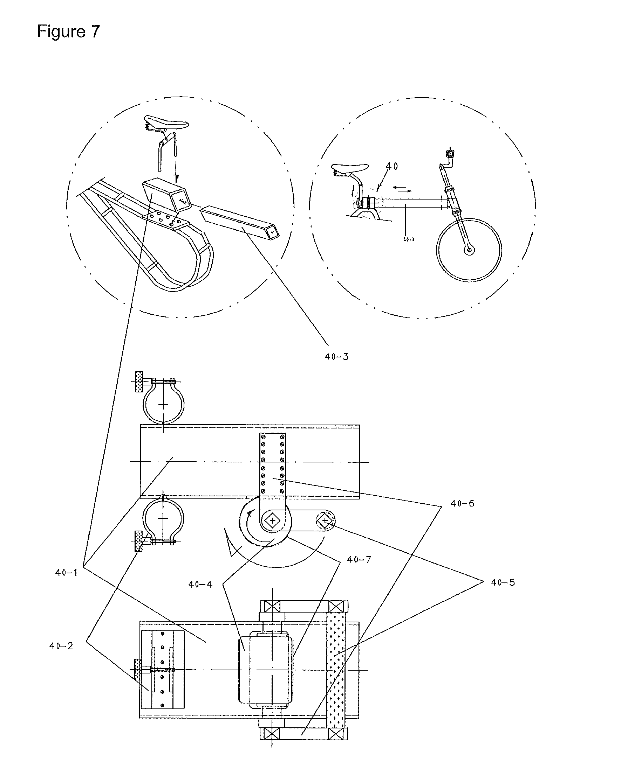

Figure 7 shows a body length adjusting apparatus 40.

There is provided a sliding block 40-1 formed in a hollow rectangular bar shape, and a lower side of the sliding block 40-1 is fixed at a triangle frame of a bicycle by using a bolt. A saddle support clamp 40-2 is fixed at the left and right sides of the sliding block 40-1 for fixing the saddle of a bicycle, and the saddle support clamp 40-2 can adjust the heights of the saddle in the up and down directions.

The inner cross section of the sliding block 40-1 is formed in a square shape and a square-shaped horizontal frame 40-3 attached to a bearing housing member provided for helping the rotation of the front and rear wheel fork of the bicycle is slide-inserted into the interior of the square-shaped cross section.

In addition, a groove is formed at one side of the sliding block 40-1, and part of the spiral cam roller 40-4 having an excellent pressing and lock is fixedly inserted into the cut-away groove. The clamping or releasing operation is performed by pressing one side surface of the square shaped horizontal frame by rotating the handle 40-5 of the spiral cam roller 40-4.

The spiral cam roller 40-4 and the sliding block 40-1 are attached to the support bracket 40-6 which is attached to the upper and lower surfaces of the sliding block 40-1. An elastic member 40-7 such as rubber, polyurethane and polymer compound is coated on the outer surface of the spiral cam roller 40-4 for thereby preventing slippery of the square shaped horizontal frame 40-3.

In an embodiment of the present invention, a bicycle user stops the operation of the bicycle and rotates the handle of the spiral cam roller 40-4 and pulls the steering handle bar of the bicycle in the direction of the user body for thereby reducing the length of the bicycle, and the handle of the handle bar folding apparatus is lifted, and the one-side handle bar is rotated in the direction of the user body, and the steering handle bar is folded.

The saddle support clamp 40-2 is released for thereby lowering the height of the saddle, and the pedal crank arm 20-1 of the bicycle is separated and hung underneath the saddle of the bicycle for thereby minimizing the length, height and volume of the bicycle, so the user can easily carry or move the bicycle while rolling the wheels by holding the steering handle bar.

Here the way for adjusting the height of the steering handle bar of the bicycle is similar with a known art in which like most of conventional bicycles, the circular tube attached to the steering handle bar is inserted into the circular tube vertically connected from the fork of the front and rear wheels of the bicycle.

The handle bar folding apparatus 10, the pedal crank arm separating apparatus 20 for reducing the bicycle to the volume less than the width of the saddle, and the separated driving shaft apparatus 30 and the body length adjusting apparatus 40 for obtaining an easier carry and movement by reducing the length of the bicycle according to the present invention are not limited to the disclosed constructions of the portable bicycle and can be applied to all kinds of bicycles and can be applied to other apparatuses which might be modified into various forms within the scope of the present invention.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A portable bicycle which can be carried and stored, comprising:
a handle bar folding apparatus 10 which is rotatably fixed by a one-side gear 10-3 and an other-side gear 10-4 which are engaged as the opposite ends of a one-side handle bar 10-1 and an other-side handle bar 10-2 are connected with each other, with the movements of the one-side gear 10-3 and the other-side gear 10-4 being limited by means of a handle 10-17;
a pedal crank arm separating apparatus 20 in which a rectangular key groove is formed at both ends of the pedal crank arm 20-1 and is engaged with the rectangular keys of the pedal 20-6 and the driving shaft, for thereby detachably fixing the rectangular keys of the pedal 20-6 and the driving shaft while a stop pin 20-4 is elastically supported by means of a plate spring 20-2;
a separated driving shaft apparatus 30 in which a one-side driving shaft 30-1 and an other-side driving shaft 30-2 connected with two pedal crank arms 20-1 are separated from each other, and the one-side driving shaft 30-1 and the other-side driving shaft 30-2 are drivingly connected with the driven driving shaft 30-7 fixed at the U-shaped bracket, and the front wheel of the bicycle is inserted into the interior of the U-shaped bracket 30-4 when it is needed to reduce the size of the bicycle; and
a body length adjusting apparatus 40 which includes a sliding block 40-1 for allowing a square shaped horizontal frame 40-3 fixed at a fork of the front wheel to slide in the interior, with a saddle being fixed at the sliding block 40-1 with its height being adjustable, and the square shaped horizontal frame 40-3 can be fixed or move by means of the spiral cam roller 40-4 fixed at one side of the sliding block 40-1.

2. The bicycle of claim 1, wherein said handle bar folding apparatus 10 is constituted in such a manner that the one-side gear 10-3 and the other-side gear 10-4 are fixed at the lower bracket 10-5 by using the one-side gear pin 10-6 and the other-side gear pin 10-7 at both ends of the one-side handle bar 10-1 and the other-side handle bar 10-2, and the one-side idle gear 10-8 and the other-side idle gear 10-9 are engaged with each other and fixed between the one-side gear 10-3 and the other-side gear 10-4 by using the one-side idle gear pin 10-10 and the other side idle gear pin 10-11, and a hole is formed at the center of the lower bracket 10-5, and the center pin 10-12 passes through hole, a spring 10-13 is inserted into an outer side of the passed-through center pin 10-12 and is fixed by a snap ring, and two holes are formed at the upper surfaces of the one-side gear 10-3 and the other side gear 10-4 at the same circumferential intervals at an angle of 90° with respect to the center line of each fixing pin, and the one-side gear fixing pin 10-14 and the other-side gear fixing pin 10-15 are fixedly inserted into the holes, and the upper ends of the center pin 10-12, the one-side gear fixing pin 10-14 and the other-side gear fixing pin 10-15 are inserted into three holes formed at the lower surface of the handle 10-17 via the holes formed at the upper cover 10-16.

3. The bicycle of claim 1, wherein said pedal crank separating apparatus 20 is constituted in such a manner that a pin hole is formed at one side of the rectangular key groove formed at a circular inner diameter portion of the pedal crank arm 20-1, and a stop pin 20-4 is inserted into the pin hole, and a groove is formed at a circular end outer diameter portion, and one end of the plate spring 20-1 is fixed with a fixing screw 20-3, and the stop pin 20-4 is elastically supported by the other end of the plate spring 20-2, and part of the front end of the stop pin 20-4 is protruded from an outer side of the plate spring 20-2, and the pulling handle 20-5 is rotatably fixed, and the stop pin 20-4 can be fixed or detached as the stop pin is inserted into or escape from the hole formed at the rectangular groove of the pedal or the driving shaft.

4. The bicycle of claim 1, wherein said separated driving shaft apparatus 30 is constituted in such a manner that the driving shaft apparatus is divided into a one-side driving shaft 30-1 and an other-side driving shaft 30-2, and the one-side chain sprocket 30-5 and the other-side chain sprocket 30-6 are axially fixed at the front ends of the one-side driving shaft 30-1 and the other-side driving shaft 30-2, and the support bearing 30-3 fixed at the one-side driving shaft 30-1 and the other-side driving shaft 30-2 is fixedly inserted into left and right sides of the U-shaped bracket 30-4, and the one-side driven sprocket 30-9 and the other-side driven sprocket 30-10 are axially fixed at the driven driving shaft 30-7 of which both ends are rotatably fixed at the inner side of the U-shaped bracket 30-4, and the one-side chain sprocket 30-5 and the one-side driven sprocket 30-9 are connected with a chain 30-11, and the other-side chain sprocket 30-6 and the other-side driven sprocket 30-10 are connected with each other.

5. The bicycle of claim 1, wherein said body length adjusting apparatus 40 includes a sliding block fixed at a triangle frame of a bicycle, and a saddle support clamp 40-2 is fixed at left and right sides of the sliding block 40-1, respectively, and a square shaped horizontal frame 40-3 attached to the bearing housing member is slide-fixed into an inner rectangular cross section of the sliding block 40-1, and a groove is formed at one surface of the sliding block 40-1, and part of the spiral cam roller 40-4 is fixedly inserted into the cut-away groove, and the clamping or releasing operation is performed by pressing one side of the square shaped horizontal frame by rotating the handle 40-5 of the spiral cam roller 40-4.

6. The bicycle of claim 5, wherein an elastic member 40-7 made of rubber, polyurethane, polymer compound or the like is coated on an outer surface of the spiral cam roller 40-4 for thereby preventing the slippery of the square shaped horizontal frame 40-3.
